# FASCICULE DE BREVET EUROPEEN

(11) **EP 2 031 303 B1**
(45) Date de publication et mention de la délivrance du brevet: **13.06.2018**
(21) Numéro de dépôt: 08161417.4
(22) Date de dépôt: 30.07.2008
(51) Int. Cl.: F23R 3/50, F23R 3/60, F02C 3/14

(54) **Turbomachine à chambre annulaire de combustion**
Turbotriebwerk mit ringförmiger Brennkammer
Turbomachine with annular combustion chamber

(30) Priorité: 30.08.2007 FR 0706070
(43) Date de publication de la demande: 04.03.2009
(73) Titulaire: Snecma, 75015 Paris (FR)
(72) Inventeur: COMMARET, Patrice, André, 77950, RUBELLES (FR); DE SOUSA, Mario, 77240, CESSON LA FORET (FR); HERNANDEZ, Didier, 77720, QUIERS (FR)
(74) Mandataire: Pichat, Thierry

(56) Documents cités:
- EP-A- 1 312 865
- EP-A- 1 431 665
- EP-A- 1 577 505
- EP-A- 1 777 460
- GB-A- 2 263 733
- JP-A- 58 200 024
- US-A- 2 204 829
- US-A- 2 509 503
- US-A- 2 795 108
- US-A- 4 848 089
- US-A- 5 337 583

## Description

La présente invention concerne une turbomachine à chambre annulaire de combustion.

Une chambre annulaire de combustion d'une turbomachine, comprend à son extrémité amont une paroi annulaire de fond de chambre rigide et comporte à son extrémité aval des brides de fixation à des carters interne et externe. Un carénage annulaire amont est fixé sur le fond de chambre et permet d'orienter le flux d'air entrant ou contournant la chambre de combustion. La paroi de fond de chambre et le carénage comprennent des ouvertures d'entrée d'air dans la chambre, et d'insertion d'injecteurs de carburant. Les brides de fixation interne et externe, à l'extrémité aval de la chambre, sont ajourées afin de permettre le passage de l'air circulant autour de la chambre de combustion et ont de ce fait une certaine souplesse.

Une telle chambre de combustion présente un certain nombre d'inconvénients, du fait de son mode de fixation.

En effet, sa fixation unique en aval conduit à un montage de la chambre en porte-à-faux. Les vibrations générées lors du fonctionnement de la turbomachine, font vibrer la partie amont de la chambre, ce qui conduit à un désalignement entre les injecteurs et la chambre et ne permet pas de réaliser une combustion idéale du carburant injecté. Ces vibrations contribuent également à limiter la durée de vie de la chambre.

Il serait donc intéressant que les brides de fixation soient suffisamment rigides, afin de limiter les vibrations de la chambre. Cependant, lors du fonctionnement de la turbomachine, les variations de pression entre l'enceinte inter-carters et l'extérieur de cette enceinte ainsi que les variations de température, induisent des déplacements relatifs des carters interne et externe et des parois de la chambre, ce qui nécessite d'assouplir les brides aval.

Dans certaines configurations, où les caractéristiques des matériaux des carters et des parois de la chambre sont très différentes, ou bien lorsque la géométrie des brides est complexe, les brides requièrent une souplesse qui est incompatible avec leur dimensionnement mécanique et aérodynamique, nécessaire au respect des limites vibratoires de la chambre.

Le document GB2263733A décrit une turbomachine à chambre annulaire de combustion selon le préambule de la revendication 1.

La présente invention a pour objet une turbomachine qui évite les inconvénients précités de la technique antérieure d'une façon simple, efficace et économique.

Elle propose, à cet effet, une turbomachine à chambre annulaire de combustion comprenant à son extrémité amont un fond de chambre annulaire traversé par des moyens d'injection de carburant, et fixée à son extrémité aval par des brides annulaires souples à des carters radialement interne et externe, caractérisée en ce que l'extrémité amont de la chambre est reliée à au moins l'un des carters interne et externe par des pontets élastiquement déformables formés chacun d'une lame de ressort incurvée s'étendant circonférentiellement et répartis autour de la chambre de combustion, ces pontets étant fixés par boulonnage sur l'un des carters interne et externe et étant en appui radial sur le fond de chambre ou inversement.

Les pontets élastiquement déformables de support ou de suspension de l'extrémité amont de la chambre permettent d'absorber et d'amortir les vibrations générées par la turbomachine en fonctionnement. Il devient ainsi possible d'assouplir les brides aval de fixation de la chambre pour permettre les déplacements relatifs nécessaires des carters et des parois de la chambre, ce qui augmente la durée de vie de la chambre de combustion.

Les moyens de liaison de la chambre au carter interne ou externe sont placés au niveau du fond de chambre, qui est plus froid que les autres parties de la chambre, ce qui permet de limiter les déformations de ces moyens de liaisons lors de l'échauffement de la chambre en fonctionnement.

Il est préférable d'utiliser au moins trois pontets répartis autour de la chambre, afin de limiter les vibrations de la partie amont de la chambre de combustion. Les pontets s'intègrent parfaitement dans l'environnement mécanique des injecteurs et de la partie amont de la chambre de combustion, et ne perturbent pas l'écoulement d'air contournant la chambre de combustion. Le montage par boulonnage et le démontage des pontets s'avèrent faciles et rapides à réaliser ce qui simplifie les opérations de maintenance.

Avantageusement, l'appui radial de chaque pontet sur le carter interne ou externe est réalisé sur un bossage du carter interne ou externe qui est en saillie vers la chambre.

Certains des pontets peuvent être à contour fermé et comprennent une branche sensiblement plane en appui radial sur le fond de chambre ou sur un carter et une branche opposée dont la partie médiane est incurvée en direction de la première branche, les deux branches étant raccordées par des extrémités coudées en U.

Selon une autre caractéristique de l'invention, certains des pontets sont à contour ouvert et ont des extrémités coudées en U ou en C, leur lame de ressort comprenant également une partie médiane incurvée vers l'intérieur du pontet.

Des orifices de fixation au carter interne ou externe ou à la chambre de combustion sont avantageusement formés aux extrémités de la partie médiane incurvée de la lame de ressort.

Selon une autre caractéristique de l'invention, les extrémités des pontets comprennent chacune au moins deux pattes sensiblement parallèles à orientation circonférentielle, appliquées sur une surface cylindrique de carter ou de chambre annulaire.

Les pattes d'extrémité du pontet peuvent s'étendrent les unes vers les autres. Certaines des pattes peuvent s'étendrent vers l'intérieur du pontet, les autres s'étendant vers l'extérieur.

Selon une autre caractéristique de l'invention, les pattes d'extrémité sont courbées en direction axiale, ce qui assure en fonctionnement un contact linéaire permanent entre le pontet et la chambre ou l'un des carters, quelque soit la position et la forme de la chambre.

Les pattes d'extrémité s'étendant vers l'extérieur d'un pontet peuvent être imbriquées avec les pattes d'extrémité s'étendant vers l'extérieur d'un pontet adjacent, ce qui permet de maintenir axialement les pontets ensemble.

Selon encore une autre caractéristique de l'invention, l'extrémité coudée d'un pontet est en contact avec l'extrémité coudée d'un pontet adjacent, permettant ainsi de faire varier la raideur des pontets adjacents lors de leur compression. Les parties coudées en contact peuvent également comprendre des ondulations complémentaires engagées les unes dans les autres.

Le montage des pontets peut s'effectuer avec une précontrainte initiale entre au moins l'un des carters interne et externe et le fond de chambre, ce qui permet d'assurer en fonctionnement un rappel élastique permanent des pontets sur les carters interne ou externe et les parois de la chambre.

La description concerne également un pontet de support pour une chambre annulaire de combustion d'une turbomachine telle que décrite précédemment, caractérisé en ce que en ce qu'il est formé d'une lame de ressort incurvée à contour ouvert ou fermé, dans laquelle sont formés des orifices de fixation.

La lame de ressort du pontet peut être réalisée en alliage de nickel et de cobalt.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'une chambre de combustion de turbomachine selon la technique antérieure ;
- la figure 2 est une demi-vue schématique en coupe axiale d'une chambre de combustion de turbomachine selon l'invention
- la figure 3 est une vue partielle à plus grande échelle et en coupe selon la ligne A-A de la partie amont de la chambre de combustion de la figure 2
- la figure 4 est une vue schématique partielle en perspective de deux pontets adjacents sans contact ;
- la figure 5 est une vue schématique partielle en perspective de deux pontets adjacents dont les extrémités courbées sont en contact ;
- les figures 6 et 7 sont des vues schématiques en perspective de deux pontets adjacents dont les extrémités courbées sont en contact et comprennent des ondulations complémentaires ;
- la figure 8 est une vue en perspective d'une lame de ressort comprenant deux pattes d'extrémité
- les figures 9 et 10 sont des vues schématiques partielles en perspective de deux lames de ressort dont les pattes d'extrémité sont imbriquées les unes dans les autres
- la figure 11 est une vue schématique en perspective d'un pontet à contour fermé.

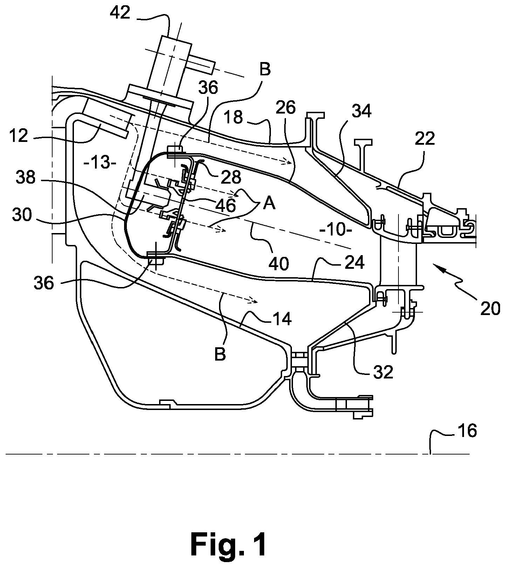

On se réfère d'abord à la figure 1 qui représente une chambre annulaire de combustion 10 selon la technique antérieure et dans laquelle un diffuseur centrifuge 12 monté en sortie d'un compresseur haute pression non représenté alimente en air un espace annulaire 13 délimité par deux carters coaxiaux, l'un 14 radialement interne par rapport à l'axe 16 de la turbomachine et l'autre 18 radialement externe, et qui contient la chambre de combustion 10. Cette chambre de combustion 10 est montée en amont d'une section de turbine 20 entourée par un carter externe 22 et comprend deux parois de révolution interne 24 et externe 26 sensiblement cylindriques et coaxiales, et une paroi annulaire 28 amont de fond de chambre sur laquelle est fixé un carénage annulaire 30 qui s'étend vers chambre sur laquelle est fixé un carénage annulaire 30 qui s'étend vers l'amont. Les extrémités aval des parois 24, 26 sont reliées aux carters 14 et 18, respectivement par des brides annulaires 32 et 34. Les extrémités amont des parois de révolution radialement interne 24 et externe 26 sont fixées sur des rebords radialement interne et radialement externe de la paroi de fond de chambre 28 et du carénage 30, respectivement, par des boulons 36.

La paroi de fond de chambre 28 supporte des têtes d'injecteurs 38 qui débouchent dans la chambre de combustion 10 et qui sont orientées selon l'axe 40 de cette chambre 10. Chaque injecteur 38 s'étend à travers un orifice du carénage 30 et comporte une partie coudée qui contourne le bord externe amont du carénage 30 et est reliée à des moyens d'alimentation en carburant 42 portés par le carter externe 18.

En fonctionnement, le flux d'air fourni par le compresseur haute pression et sortant du diffuseur 12 est guidé par le carénage 30 et se divise en une partie A qui passe au travers des orifices d'entrée d'air du carénage 30 et au travers d'orifices 44 correspondants du fond de chambre 28 pour alimenter la chambre de combustion 10, et en deux parties B qui contournent la chambre de combustion 10.

Dans la technique connue, la chambre de combustion 10 est uniquement fixée par ses brides aval 32, 34 sur les carters externes 18, 22 et interne 14 et la partie amont de la chambre de combustion 10 est donc en porte-à-faux. L'intégralité de la masse de la chambre 10 est ainsi supportée par les brides interne 32 et externe 34, lesquelles devraient être suffisamment rigides pour éviter les vibrations de la partie amont de la chambre 10, qui peuvent entraîner des désalignements des injecteurs 38 avec l'axe 40 de la chambre et endommager les têtes d'injecteurs 38 supportées par la paroi de fond de chambre 28.

Toutefois, les brides avals 32, 34 doivent aussi être suffisamment souples pour autoriser des mouvements relatifs de la chambre 10 et des carters 14, 18 du fait des variations de pression et des augmentations de température.

La réalisation des brides interne 32 et externe 34 résulte donc d'un compromis entre souplesse et rigidité qu'il n'est pas toujours aisé de satisfaire.

Une fixation amont de la chambre de combustion 10, n'est pas réalisable au moyen d'une bride similaire à celle utilisée pour la fixation aval. En effet, cela supposerait de disposer une bride dans la zone de contournement de la chambre 10, ce qui perturberait l'écoulement d'air, et de fixer cette bride dans la zone de fixation des injecteurs 38, ce qui est difficilement réalisable du fait du faible espace disponible.

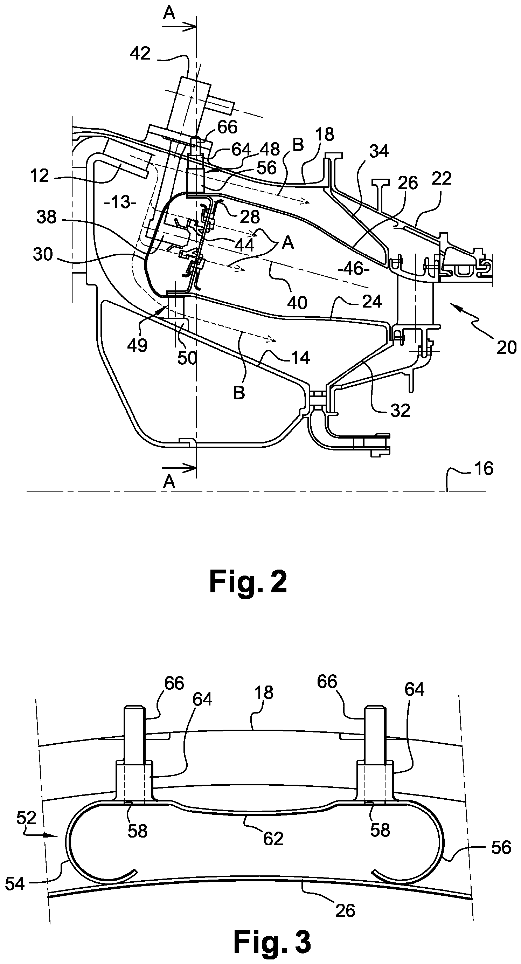

Selon l'invention, ces inconvénients ainsi que ceux mentionnés précédemment, sont évités grâce au fait que, comme représenté en figure 2, la chambre de combustion 46 est reliée à son extrémité amont au carter interne 14 et externe 18 par des moyens élastiquement déformables à raideur variable.

Ces moyens élastiquement déformables comprennent des pontets 48, formés par des lames de ressort incurvées qui relient radialement les carters interne 14 et externe 18 aux extrémités amont des parois interne 24 et externe 26 de la chambre de combustion 46. L'utilisation des pontets 48 permet de maintenir la partie amont de la chambre 46 et ainsi d'absorber une partie des vibrations de la chambre 46. Il est alors possible d'assouplir les brides aval interne 32 et externe 34, ce qui augmente la durée de vie de la chambre 46.

La chambre de combustion 46 est reliée au carter interne 14 ou externe 18 par au moins trois pontets répartis autour de la chambre, afin de permettre une bonne stabilisation de la chambre 46 en fonctionnement et de compenser les effets du montage initial en porte-à-faux de celle-ci entre les carters interne 14 et externe 18.

Dans le mode de réalisation représenté en figure 2, la chambre de combustion 46 est maintenue en amont par des pontets internes 49 et externes 48, les pontets internes 49 étant disposés en amont des pontets externes 48. Chaque pontet externe 48 est fixé au carter externe 18 par boulonnage et est en appui radial sur la paroi externe 26 et sur un rebord radialement externe du fond de chambre 28, chaque pontet interne 49 étant fixé par boulonnage sur la paroi interne 24 et sur un rebord radialement interne du fond de chambre 28 et étant en appui radial sur le carter interne 14. L'appui radial de chaque pontet interne 49 s'effectue sur un bossage 50 du carter interne 14 s'étendant vers la chambre de combustion 46.

L'orientation sensiblement radiale des pontets 48 et 49 permet d'absorber et d'amortir les vibrations radiales de la partie amont de la chambre 48 en fonctionnement.

Comme représenté en figure 3, un pontet peut être formé par une lame de ressort 52 à contour ouvert et dont les extrémités 54, 56 sont coudées en C. La lame de ressort 52 comprend des orifices 58 de part et d'autre d'une partie médiane 62 incurvée vers l'intérieur du pontet. Des plots 64 comprenant des orifices longitudinaux sont fixés sur les orifices 58 et des tiges filetées 66 sont insérées dans les plots 64 et dans les orifices 58 du pontet et sont visés sur le carter externe 18. Dans ce mode de réalisation, le pontet 52 est fixé sur le carter externe et en appui radial sur la paroi externe 26 de la chambre de combustion 46.

Lors du fonctionnement de la turbomachine, les carters interne 14 et externe 18 et les parois 24 et 26 de la chambre 46 se dilatent radialement sous l'effet de la chaleur générée par la combustion. Les pontets peuvent également se déformer pour compenser la dilatation grâce à leur partie médiane incurvée 62 s'allongeant circonférentiellement.

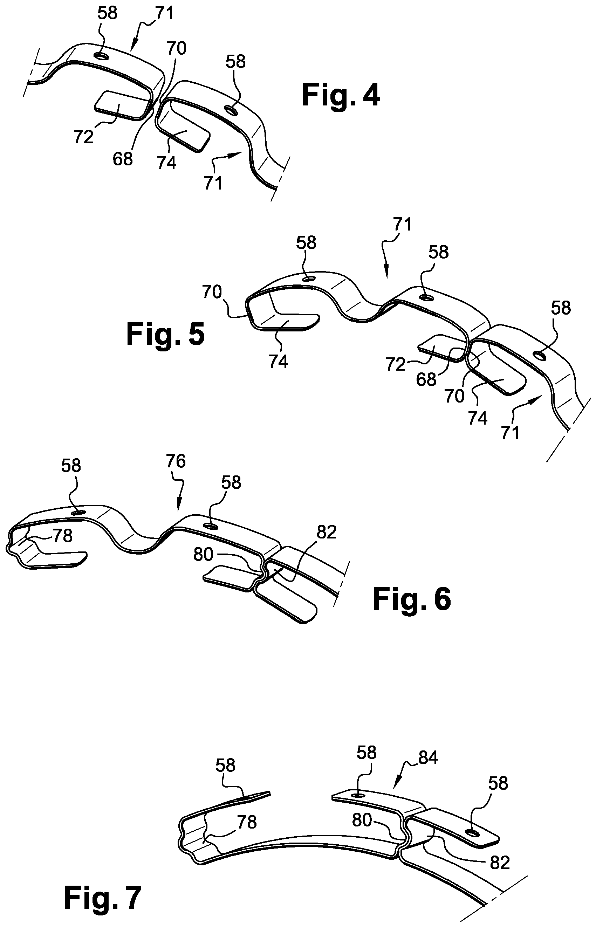

Dans une variante de l'invention (figure 4), les extrémités 68, 70 de la lame de ressort 71 sont courbées en U et comprennent chacune une patte 72, 74, laquelle peut être courbée en direction axiale, afin de permettre un contact linéaire entre le pontet et la chambre ou l'un des carters interne 14 ou externe 18, les deux pattes 72, 74 d'un pontet étant orientées circonférentiellement l'une vers l'autre.

Les pontets répartis sur la circonférence de la chambre de combustion peuvent avoir des raideurs différentes de manière à absorber au mieux les vibrations de la turbomachine en fonctionnement. Il est également possible de faire varier la raideur des pontets en les intégrant de manière particulière autour de la chambre de combustion. Par exemple, deux pontets adjacents peuvent être montés à l'intérieur de la chambre de combustion de manière à ce qu'un espace soit maintenu entre eux tant que la turbomachine est au repos (figure 4). Lors du fonctionnement de la turbomachine, les déformations de la chambre 46 et des carters 14, 18 conduisent les extrémités coudées 68, 70 des lames de ressorts 71 à entrer en contact (figure 5), ce qui modifie la raideur de l'ensemble constitué des deux lames de ressort 71 et rigidifie la liaison entre le carter interne 14 ou externe 18 et la chambre 46.

Il est possible de réaliser différentes surfaces de contact entre pontets adjacents. Aux figures 6 et 7, est représenté un pontet 76, 84 dont les extrémités courbées 78, 80 comprennent des ondulations radiales engagées dans des ondulations complémentaires formées aux extrémités courbées 82 d'un pontet adjacent.

Le pontet 84 représenté à la figure 7 présente une forme analogue aux lames de ressort précédemment décrites à la différence que les orifices de fixation 58 sont formés aux extrémités de la lame de ressort 84 et que celle-ci ne présente pas de partie médiane incurvée. Un tel pontet présente une raideur encore différente de celle des pontets avec partie médiane incurvée.

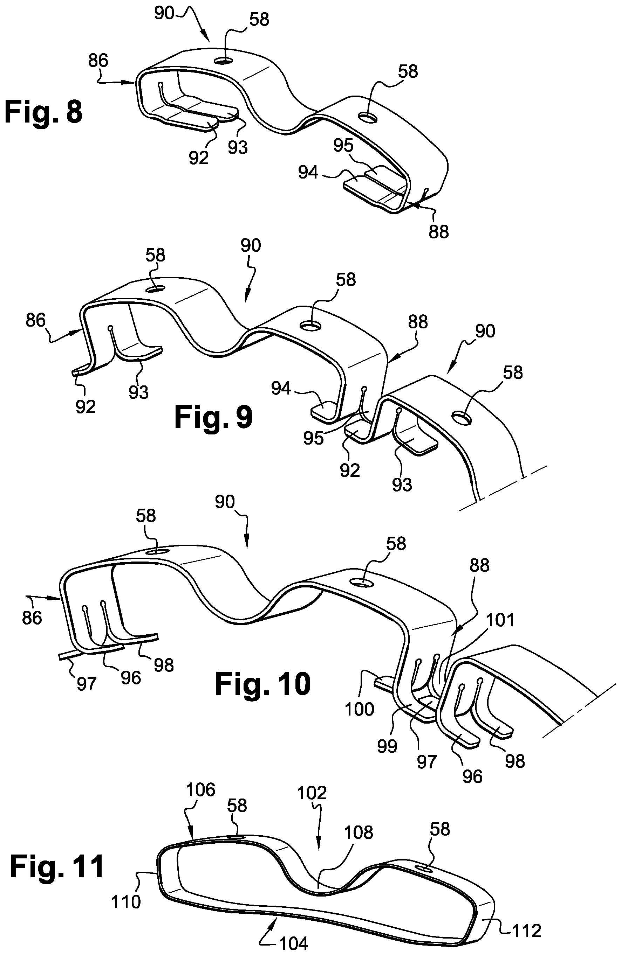

Dans une variante de l'invention représentée à la figure 8, les extrémités courbées 86, 88 de la lame de ressort 90 comprennent chacune deux pattes sensiblement parallèles 92, 93 et 94, 95. Les pattes de chacune des extrémités courbées 86, 88 s'étendent circonférentiellement les unes vers les autres. Les pattes sont destinées à être appliquées sur le carter interne 14 ou externe 18 ou sur l'une des parois de révolution interne 24 ou externe 26 de la chambre de combustion 46 et permettent d'amortir les vibrations axiales de la chambre 46 en fonctionnement.

Dans une autre variante de l'invention représentée en figure 9, les deux pattes 92, 93 d'une extrémité de la lame de ressort d'un pontet sont telles que l'une 93 est orientée vers l'intérieur de la lame et l'autre 92 est orientée vers l'extérieur. Chacune des pattes 94, 95 de l'autre extrémité de la lame de ressort 90 est orientée de la même façon que la patte avec laquelle elle est alignée circonférentiellement. Une telle configuration permet d'aligner axialement la patte 92 d'une lame de ressort avec la patte 95 de la lame de ressort adjacente, ce qui permet de maintenir solidairement en direction axiale les lames de ressorts 90 de deux pontets adjacents.

Dans l'exemple de réalisation représenté en figure 10, chacune des extrémités courbées 86, 88 comprend trois pattes s'étendant circonférentiellement 96, 97, 98 et 99, 100, 101. La patte milieu 97 de l'extrémité courbée 86 est orientée vers l'extérieur de la lame de ressort, tandis que les deux autres pattes 96,98 sont orientées vers l'intérieur. La patte milieu 100 de l'extrémité courbée 88 est orientée vers l'intérieur de la lame de ressort, tandis que les deux autres pattes 99, 101 sont orientées vers l'extérieur. De manière similaire au mode de réalisation précédent, les pattes d'extrémités orientées vers l'extérieur 99, 101 sont disposées axialement en alternance et imbriquées avec la patte orientée vers l'extérieur 97 du pontet adjacent.

Dans une variante de l'invention représentée en figure 11, le pontet 102 est à contour fermé et comprend une première branche 104 sensiblement plane et une deuxième branche 106 opposée à la première branche 104 et dont la partie médiane 108 est incurvée en direction de la première branche 104. Les deux branches 104, 106 sont raccordées à leurs extrémités par des parties coudées 110, 112 en U. Des orifices 58 sont également formés de part et d'autre de la partie médiane incurvée 108, laquelle peut également s'allonger en cas de dilatation ou déformation de la pièce sur laquelle elle est fixée, de manière similaire aux lames de ressort précédemment décrites. Un tel pontet présente une raideur différente de celle d'une lame de ressort à contour ouvert.

Selon des variantes possibles de l'invention, Il est possible de disposer des pontets uniquement entre le carter interne 14 et la paroi interne 24 de la chambre 46 ou uniquement entre le carter externe 18 et la paroi externe 26 de la chambre 46. Il est également possible de placer des pontets à la fois en interne et en externe. Les pontets internes peuvent être pour tout ou partie en appui radial sur la paroi interne 24 et boulonnés sur le carter interne 14 ou en appui radial sur le carter interne 14 et boulonnés sur la paroi interne 24. De manière similaire, les pontets externes peuvent être pour tout ou partie en appui radial sur la paroi externe 26 et boulonnés sur le carter externe 18 ou en appui radial sur le carter externe 18 et boulonnés sur la paroi externe 26. Le carter externe 18 peut comprendre des bossages s'étendant vers la chambre 46 de manière similaire au bossage 50 du carter interne 14 représenté à la figure 2 pour permettre l'appui radial des pontets.

Les pontets peuvent être fixés par boulonnage au fond de chambre 28, en utilisant les éléments de boulonnage de la paroi interne 24 ou externe 26 au fond de chambre 28, ce qui évite de réaliser des perçages additionnels et d'alourdir la turbomachine par l'ajout de pièces supplémentaires de boulonnage.

D'autres agencements des pontets peuvent être imaginés sans sortir du cadre de l'invention, en particulier, on peut imaginer de coupler des pontets de forme différentes, tels que par exemple la lame de ressort décrit en référence à la figure 7 avec le pontet décrit en figure 8 afin d'obtenir une raideur particulière pour la liaison entre le carter interne 14 ou externe 18 et la chambre. Il est également possible de combiner des pontets à contour fermé 102 avec des pontets du type à contour ouvert.

Comme on peut le voir aux dessins, les pontets ont une forme générale incurvée circonférentiellement, ce qui facilite la mise en place des pontets entre les carters interne 14 et externe 18 et les parois de la chambre. De plus, leur forme n'offre qu'une faible résistance à l'air contournant la chambre de combustion 46 (figure 3).

Dans un mode de réalisation de l'invention, les pontets sont montés préférentiellement, uniquement entre le carter interne 14 et la paroi interne 24 de la chambre 46, car le carter interne 14 subit un différentiel de pression moins important en fonctionnement que celui subit par le carter externe 18. Les pontets agencés en interne sont donc moins susceptibles de se déformer.

Les pontets peuvent avantageusement être montés en interne ou externe dans un état précontraint, afin d'assurer un rappel élastique permanent entre le carter interne 14 ou externe 18 et les parois de la chambre 46.

L'intégration des pontets est réalisée à l'extrémité amont de la chambre 46 correspondant à la zone la plus froide de la chambre de combustion 46, ce qui limite les effets de la forte température de combustion sur les pontets.

Le matériau utilisé pour la réalisation des pontets doit être compatible avec les matériaux des carters et de la chambre afin d'éviter des frottements trop important entre les surfaces en contact. Ce matériau doit également pouvoir résister à une température supérieure à 600°C correspondant à la température dans la zone des pontets. Les pontets peuvent ainsi être réalisés en alliage de nickel et de cobalt.

## Revendications

1. Turbomachine à chambre annulaire de combustion (46) comprenant à son extrémité amont un fond de chambre annulaire (28) traversé par des moyens d'injection de carburant (42), et fixée à son extrémité aval par des brides annulaires souples (24, 26) à des carters radialement interne (14) et externe (18), **caractérisée en ce que** l'extrémité amont de la chambre (46) est reliée à au moins l'un des carters interne (14) et externe (18) par des pontets (48, 49) élastiquement déformables formés chacun d'une lame de ressort incurvée s'étendant circonférentiellement et répartis autour de la chambre de combustion (46), ces pontets étant fixés par boulonnage sur l'un des carters interne (14) et externe (18) et étant en appui radial sur le fond de chambre (28) ou inversement.

2. Turbomachine selon la revendication 1, **caractérisée en ce qu'**au moins l'un des carters interne (14) et externe (18) comprend un bossage (50) en saillie vers la chambre (46) permettant l'appui radial du pontet (52, 102).

3. Turbomachine selon la revendication 1 ou 2, **caractérisée en ce que** certains des pontets (102) sont à contour fermé et comprennent une branche sensiblement plane (104) en appui radial sur le fond de chambre (28) ou sur un carter (14, 18) et une branche opposée (106) dont la partie médiane (108) est incurvée en direction de la première branche (104), les deux branches (104, 106) étant raccordées par des extrémités coudées en U.

4. Turbomachine selon la revendication 3, **caractérisée en ce que** les extrémités de la partie médiane incurvée (108) comprennent des orifices de fixation (58) au carter interne (14) ou externe (18) ou à la chambre de combustion (46).

5. Turbomachine selon la revendication 1 ou 2, **caractérisée en ce que** certains pontets sont à contour ouvert et comprennent une partie médiane incurvée (62) vers l'intérieur du pontet avec des extrémités coudées en U ou en C.

6. Turbomachine selon la revendication 5, **caractérisée en ce que** les extrémités de la partie médiane incurvée (62) de la lame de ressort comprennent des orifices de fixation (58) au carter interne (14) ou externe (18) ou à la chambre de combustion (46).

7. Turbomachine selon la revendication 5 ou 6, **caractérisée en ce que** les extrémités des pontets comprennent chacune au moins deux pattes (92, 93) sensiblement parallèles à orientation circonférentielle, appliquées sur une surface cylindrique de carter (14, 18) ou de chambre annulaire (46).

8. Turbomachine selon la revendication 7, **caractérisée en ce que** les pattes d'extrémité (92, 93) d'un pontet s'étendent les unes vers les autres.

9. Turbomachine selon la revendication 7 ou 8, **caractérisée en ce que** les pattes d'extrémité sont courbées en direction axiale.

10. Turbomachine selon l'une des revendications 7 à 9, **caractérisée en ce que** certaines pattes (96, 98) d'extrémité s'étendent vers l'intérieur du pontet, les autres pattes s'étendant vers l'extérieur du pontet (97).

11. Turbomachine selon la revendication 10, **caractérisée en ce que** les pattes d'extrémité s'étendant vers l'extérieur (97) d'un pontet sont imbriquées avec les pattes d'extrémité s'étendant vers l'extérieur (99, 101) d'un pontet adjacent.

12. Turbomachine selon l'une des revendications 3 à 9, **caractérisée en ce que** l'extrémité coudée (68) d'un pontet est en contact avec l'extrémité coudée (70) d'un pontet adjacent.

13. Turbomachine selon la revendication 12, **caractérisée en ce que** les extrémités coudées (80, 82) en contact comprennent des ondulations complémentaires engagées les unes dans les autres.

14. Turbomachine selon l'une des revendications 1 à 13, **caractérisée en ce que** les pontets sont montés avec une précontrainte initiale entre au moins l'un des carters interne (14) et externe (18) et le fond de chambre (28).

## Patentansprüche

1. Turbotriebwerk mit einer ringförmiger Brennkammer (46), die an ihrem stromaufwärtigen Ende einen Ringkammerboden (28) aufweist, durch den sich Treibstoffeinspritzmittel (42) erstrecken, und die an ihrem stromabwärtigen Ende über nachgiebige Ringflansche (24, 26) an ein radial inneres (14) und ein radial äußeres Gehäuse (18) befestigt ist,
**dadurch gekennzeichnet, dass**
das stromaufwärtige Ende der Kammer (46) mit zumindest einem aus innerem (14) und äußerem Gehäuse (18) über elastisch verformbare Brücken (48, 49) verbunden ist, die jeweils aus einem sich umfänglich erstreckenden, gekrümmten Federblatt gebildet sind und um die Brennkammer (46) herum verteilt sind, wobei diese Brücken durch Verschrauben an das eine aus innerem (14) und äußerem Gehäuse (18) bzw. umgekehrt an das andere befestigt und radial in Abstützung am Kammerboden (28) sind.

2. Turbotriebwerk nach Anspruch 1,
**dadurch gekennzeichnet, dass**
zumindest eines aus innerem (14) und äußerem Gehäuse (18) eine Erhebung (50) aufweist, die zur Kammer (46) hin vorspringt und die radiale Abstützung der Brücke (52, 102) gestattet.

3. Turbotriebwerk nach Anspruch 1 oder 2,
**dadurch gekennzeichnet, dass**
bestimmte der Brücken (102) eine geschlossene Kontur haben und einen im Wesentlichen flachen Schenkel (104) haben, der sich radial am Kammerboden (28) oder an einem Gehäuse (14, 18) abstützt, sowie einen entgegengesetzten Schenkel (106), dessen Mittelteil (108) in Richtung des ersten Schenkels (104) gekrümmt ist, wobei die beiden Schenkel (104, 106) über U-förmig abgebogene Enden verbunden sind.

4. Turbotriebwerk nach Anspruch 3,
**dadurch gekennzeichnet, dass**
die Enden des gekrümmten Mittelteils (108) Befestigungsöffnungen (58) zum Befestigen an das innere (14) bzw. äußere Gehäuse (18) oder an die Brennkammer (46) aufweisen.

5. Turbotriebwerk nach Anspruch 1 oder 2,
**dadurch gekennzeichnet, dass**
bestimmte Brücken eine offene Kontur haben und ein zum Inneren der Brücke gekrümmtes Mittelteil (62) mit U- oder C-förmig umgebogenen Enden aufweisen.

6. Turbotriebwerk nach Anspruch 5,
**dadurch gekennzeichnet, dass**
die Enden des gekrümmten Mittelteils (62) des Federblatts Befestigungsöffnungen (58) zum Befestigen an das innere (14) bzw. äußere Gehäuse (18) oder an die Brennkammer (46) aufweisen.

7. Turbotriebwerk nach Anspruch 5 oder 6,
**dadurch gekennzeichnet, dass**
die Enden der Brücken jeweils zumindest zwei im Wesentlichen parallel verlaufende Laschen (92, 93) mit umfänglicher Ausrichtung aufweisen, die an einer zylindrischen Fläche des Gehäuses (14, 18) oder der Ringkammer (46) anliegen.

8. Turbotriebwerk nach Anspruch 7,
**dadurch gekennzeichnet, dass**
die Endlaschen (92, 93) einer Brücke sich aufeinander zu erstrecken.

9. Turbotriebwerk nach Anspruch 7 oder 8,
**dadurch gekennzeichnet, dass**
die Endlaschen in axialer Richtung umgebogen sind.

10. Turbotriebwerk nach einem der Ansprüche 7 bis 9,
**dadurch gekennzeichnet, dass**
bestimmte Endlaschen (96, 98) sich zum Inneren der Brücke hin erstrecken, wobei die weiteren Laschen sich nach außerhalb der Brücke (97) erstrecken.

11. Turbotriebwerk nach Anspruch 10,
**dadurch gekennzeichnet, dass**
die sich nach außerhalb einer Brücke erstreckenden Endlaschen (97) mit den sich nach außerhalb einer angrenzenden Brücke erstreckenden Endlaschen (99, 101) ineinandergreifen.

12. Turbotriebwerk nach einem der Ansprüche 3 bis 9,
**dadurch gekennzeichnet, dass**
das umgebogene Ende (68) einer Brücke mit dem umgebogenen Ende (70) einer angrenzenden Brücke in Kontakt ist.

13. Turbotriebwerk nach Anspruch 12,
**dadurch gekennzeichnet, dass**
die in Kontakt stehenden, umgebogenen Enden (80, 82) komplementäre Wellen aufweisen, die in Eingriff miteinander sind.

14. Turbotriebwerk nach einem der Ansprüche 1 bis 13,
**dadurch gekennzeichnet, dass**
die Brücken mit einer ursprünglichen Vorspannung zwischen zumindest einem aus innerem (14) und äußerem Gehäuse (18) und dem Kammerboden (28) angebracht sind.

## Claims

1. A turbomachine with an annular combustion chamber comprising, at its upstream end, an annular chamber bottom (28) traversed by fuel injection means (42) and attached at its downstream end by flexible annular flanges (24,26) to radially inner (14) and outer (18) casings, **characterized in that** the upstream end of the chamber (46) is connected to at least one of the inner (14) and outer (18) casings by elastically deformable bridges (48,49) each formed of a curved spring leaf extending circumferentially and distributed about the combustion chamber, these bridges being attached by bolting to one of the inner (14) and outer (18) casings and resting radially on the chamber bottom (28) or vice versa.

2. A turbomachine according to claim 1, **characterized in that** at least one of the inner (14) and outer (18) casings comprises a boss (50) protruding towards the chamber (46) allowing the radial resting of the bridge (52,102).

3. A turbomachine according to claim 1 or 2, **characterized in that** certain of the bridges (102) have a closed contour and comprise a substantially flat branch (104) resting radially on the chamber bottom (28) or on a casing (14,18) and an opposite branch (106) whose mid-portion (108) is curved in the direction of the first branch (104), the two branches being connected by U-shaped bent ends.

4. A turbomachine according to claim 3, **characterized in that** the ends of the curved mid-portion (108) comprise orifices for attachment (58) to the inner (14) or outer casing (18) or to the combustion chamber (46).

5. A turbomachine according to claim 1 or 2, **characterized in that** certain bridges have an open contour and comprise a mid-portion curved (62) toward the inside of the bridge with U-shaped or C-shaped bent ends.

6. A turbomachine according to claim 5, **characterized in that** the ends of the curved mid-portion (62) of the spring leaf comprise orifices for attachment (58) to the inner (14) or outer (18) casing or to the combustion chamber (46).

7. A turbomachine according to claim 5 or 6, **characterized in that** the ends of the bridges each comprise at least two substantially parallel, circumferentially oriented feet (92,93), applied to a cylindrical surface of a casing (14,18) or of an annular chamber (46).

8. A turbomachine according to claim 7, **characterized in that** the end feet (92,93) of a bridge extend toward one another.

9. A turbomachine according to claim 7 or 8, **characterized in that** the end feet are curved in an axial direction.

10. A turbomachine according to claim 7 or 9, **characterized in that** certain end feet (96,98) extend toward the inside of the bridge, the other feet extending toward the outside (97) of the bridge.

11. The turbomachine as claimed in claim 10, **characterized in that** the end feet extending toward the outside (97) of a bridge are nested with the end feet extending toward the outside (99,101) of an adjacent bridge.

12. The turbomachine as claimed in claim 3, **characterized in that** the bent end (68) of a bridge in contact with the bent end (70) of an adjacent bridge.

13. The turbomachine as claimed in claim 12, **characterized in that** the bent ends (80,82) in contact comprise matching undulations engaged in one another.

14. The turbomachine as claimed in claim 1, **characterized in that** the bridges are mounted with an initial prestress between at least one of the inner (14) and outer (18) casings and the chamber bottom (28).
